Europäisches Patentamt

European Patent Office

Office européen des brevets

(19)

(11) Veröffentlichungsnummer : **0 075 137**
**B1**

(12) **EUROPÄISCHE PATENTSCHRIFT**

(45) Veröffentlichungstag der Patentschrift :
13.03.85

(21) Anmeldenummer : 82107922.5

(22) Anmeldetag : 28.08.82

(51) Int. Cl.⁴ : **B 65 G 21/20**

(54) Förderer.

(30) Priorität : 18.09.81 DE 3137190

(43) Veröffentlichungstag der Anmeldung :
30.03.83 Patentblatt 83/13

(45) Bekanntmachung des Hinweises auf die Patenterteilung : 13.03.85 Patentblatt 85/11

(84) Benannte Vertragsstaaten :
BE DE FR GB IT NL

(56) Entgegenhaltungen :
GB-A- 2 065 586

(73) Patentinhaber : Maschinenfabrik BESTA
Voisweg 1-5
D-4030 Ratingen 1 (DE)

(72) Erfinder : Meyer, Hans Jürgen, Ing.grad.
Am Obersthof 3
D-4030 Ratingen (DE)

(74) Vertreter : Hennicke, Albrecht, Dipl.-Ing. et al
Patentanwälte Dipl.-Ing. Buschhoff Dipl.-Ing. Hennicke Dipl.-Ing. Vollbach Kaiser-Wilhelm-Ring 24
D-5000 Köln 1 (DE)

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft einen Förderer, insbesondere für Kohle, mit einem aus Böden und Seitenwänden bestehenden geschlossenen Förderkasten und mit einem im wesentlichen zylindrischen Gehäuse, welches den Förderkasten mit Abstand umgibt.

Den Kohlemühlen für Kohlenstaubfeuerungen wird die Kohle vom Bunker mit Förderern zugeführt, die ein druckdichtes Gehäuse haben müssen, um nicht nur den Betriebsdruck aufnehmen zu können, der höher ist als der Atmosphärendruck, sondern auch den Druck einer Explosion, die im Inneren der Kohlemühle auftreten und sich bis in den vorgeschalteten Förderer fortpflanzen kann. Um diesen Forderungen Rechnung zu tragen, ist ein Förderer der eingangs näher bezeichneten Art bekannt (GB-A-20 65 586) der ein zylindrisches Gehäuse aufweist, welches den Fördererkasten mit Abstand umgibt und bei dem der Zwischenraum zwischen Förderkasten und Gehäusewandung mit einem feuerhemmenden Kunststoffschaum ausgefüllt ist. Dieser Kunststoffschaum soll den im Falle einer Explosion auftretenden Innendruck gleichmäßig auf die zylindrische Gehäusewand übertragen, die ihrerseits so bemessen ist, daß sie den Explosionsgasdruck aufnehmen kann.

Bei der bekannten Einrichtung ist zweifelhaft, ob der Druck tatsächlich gleichmäßig auf die ganze zylindrische Gehäusewand übertragen wird. Vor allem aber ist nachteilig, daß die einem hohen Verschleiß ausgesetzten Böden und Seitenwände des Förderers nach dem Ausschäumen der Hohlräume vollflächig mit dem Kunststoffschaum verbunden sind und dann nicht mehr ohne weiteres entfernt oder ausgewechselt werden können. Dies ist jedoch notwendig, da die Seitenwände und Böden des Förderkastens infolge von Korrosion und aufgrund der Schleißwirkung der Förderketten des Förderers eine wesentlich kürzere Lebensdauer haben als das den Förderer umgebende Gehäuse.

Aufgabe der Erfindung ist es deshalb, einen Förderer mit druckdichtem Gehäuse der eingangs näher erläuterten Art so auszubilden, daß ohne Einschränkung des Explosionsschutzes der Förderkasten mit allen seinen Teilen zugängig bleibt und gleichzeitig das Eindringen von Staub in den Hohlraum zwischen Gehäuse und Förderkasten verhindert wird.

Diese Aufgabe wird mit der Erfindung dadurch gelöst, daß die Hohlräume zwischen Förderkasten und Gehäuse gegen den Förderraum durch mindestens ein Schott staubdicht abgeschlossen sind, in welchem mindestens eine Berstscheibe angeordnet ist.

Diese Ausgestaltung hat den Vorteil, daß die Hohlräume zwischen gehäusewand und Förderkasten hohl bleiben können und die Seitenwände und Böden des Förderkastens jederzeit demontiert und ausgewechselt werden können. Im Betrieb sind die Hohlräume staubdicht verschlossen, im Falle einer Explosion wird aber die Berstscheibe sofort zerstört, so daß ein sofortiger Druckausgleich zwischen dem Förderraum und den Hohlräumen zwischen Förderkasten und Gehäusewand stattfinden kann.

Die Seitenhohlräume zwischen der zylindrischen Gehäusewand und den Seitenwänden des Förderkastens stehen zweckmäßig mit den Bodenhohlräumen zwischen der Gehäusewand und den Böden des Förderkastens in Verbindung. Hierdurch ist eine leichtere und schnellere Druckausbreitung im Falle einer Explosion möglich.

Um im Betrieb einen Druckausgleich zwischen dem Förderraum und den diesen umgebenden Hohlräumen zwischen Förderkasten und Gehäusewand zu erreichen, ist in den Seitenwänden des Förderkastens und/oder in dem Schott mindestens eine staubdicht, aber nicht druckdicht verschlossene Öffnung angeordnet. Auf diese Weise kann das Eindringen von Staub durch Ritzen und Spalten aus dem Förderraum in den Hohlraum zwischen Förderkasten und Gehäusewand verhindert werden.

Die Berstscheibe ist zweckmäßig eine dünne Scheibe aus Blech oder Kunststoff, die unter Zwischenlage eines Dichtringes am Schott befestigt ist. Die Öffnungen in den Seitenwänden des Förderkastens und/oder im Schott können durch Gewebe- oder Sinterfilter verschlossen sein.

Da kleinere Verpuffungen in der Mühle oder im Förderer nicht immer sofort bemerkt werden, ist es zweckmäßig, der Berstscheibe eine Überwachungseinrichtung zuzuordnen, die den Zustand der Berstscheibe kontrolliert und einen Alarm auslöst oder eine Anzeige sichtbar macht, welche der Bedienung der Anlage eine Zerstörung der Berstscheibe anzeigt.

Zu dem gleichen Zweck kann in der Gehäusewand an einer der Berstscheibe gegenüberliegenden Stelle ein Sichtfenster angeordnet sein, durch welches die Berstscheibe beobachtet werden kann.

Weitere Merkmale und Vorteile der Erfindung ergeben sich aus der nachfolgenden Beschreibung und den Zeichnungen, in denen bevorzugte Ausführungsformen der Erfindung an Ausführungsbeispielen näher erläutert sind. Es zeigt:

Figur 1 einen Förderer nach der Erfindung im Längsschnitt,

Figur 2 den Gegenstand der Fig. 1 in einem Querschnitt nach Linie II-II und

Figur 3 eine etwas andere Ausführungsform der Erfindung in einem der Fig. 2 entsprechenden Querschnitt.

In den Zeichnungen ist mit 10 ein Förderer bezeichnet, der als Doppelkettenkratzförderer ausgebildet ist und in einem geschlossenen Förderkasten läuft, der in seiner Gesamtheit mit 11 bezeichnet ist. Der Förderkasten 11 besteht aus Seitenwänden 13 und 16, einem unteren Boden oder Fördertisch 14 und einem Zwischenboden oder oberem Fördertisch 15.

Der Förderkasten 11 mit seinem Förderer 10, der auch Trogkettenförderer genannt wird und bei dem vorliegenden Ausführungsbeispiel dazu dient, Kohle einer Mühle zuzuführen, ist zusammen mit seiner Antriebsstation 17 und seiner Umkehrstation 18 in einem zylindrischen Gehäuse 19 untergebracht, das eine zylindrische Außenwand 20 aufweist und an seinen Stirnseiten durch Stirnwände 21 und 22 verschlossen ist. In der Mitte des zylindrischen Gehäuses 19 befindet sich etwa in der Mitte eine an einem hier nicht näher dargestellten Bunkerauslauf angeschlossene Einlauföffnung 23, deren seitliche und hintere Wände 24 und 25 bis in den Förderkasten hineinreichen und mit dessen Seitenwänden 13 staub- und druckdicht verbunden sind. An der vorderen Wand 26 des Einlaufes 23, die in größerem Abstand vom Zwischenboden 15 endet, ist ein Schichthöhenbegrenzer 27 höhenverstellbar geführt, der die Höhe der von dem Förderer 10 in der Einlauföffnung 23 abgezogenen Fördergutschicht bestimmt.

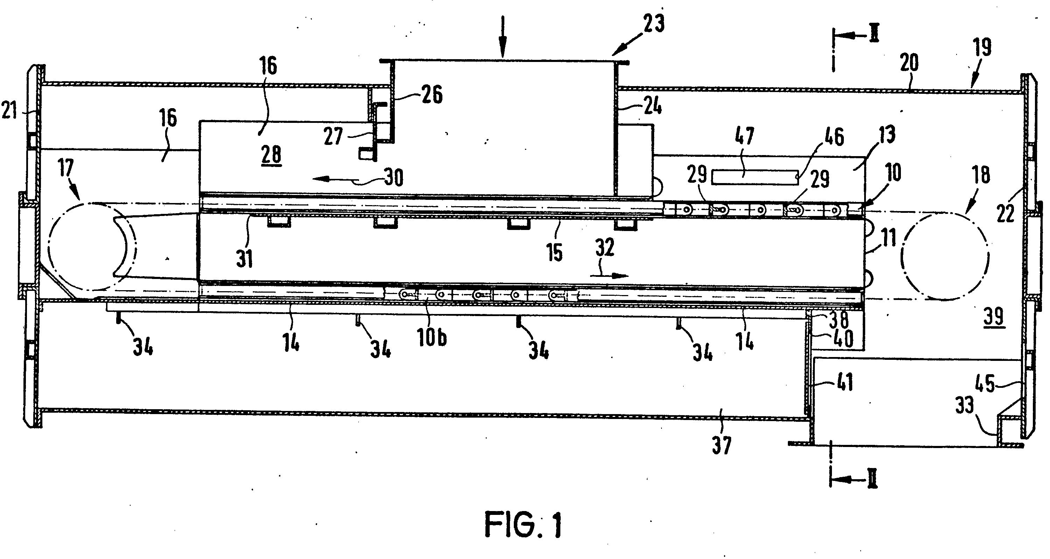

Das in der Einlauföffnung 23 von dem Förderer 10 abgezogene Fördergut 28 wird von den Kratzern 29 des Förderers auf dem Zwischenboden 15 zunächst in Richtung des Pfeiles 30 in Fig. 1 nach links gefördert und fällt durch eine Öffnung 31 im Förderboden 15 auf den unteren Fördertisch 14, wo es von dem Untertrum 10b des Kratzkettenförderers in Richtung des Pfeiles 32 in entgegengesetzter Richtung nach rechts gefördert wird, wo es am Ende des Fördertisches 14 in die Austragöffnung 33 geworfen wird, die sich am rechten Ende des Gehäuses 19 befindet.

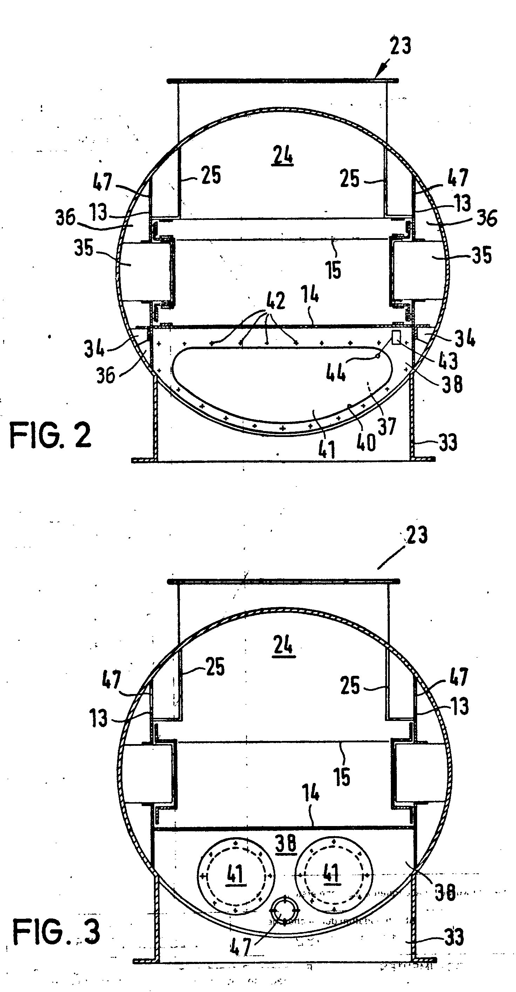

Man erkennt aus den Fig. 1 und 2, daß der Förderkasten 11 mit Konsolen 34 und Tragblechen 35 von dem zylindrischen Gehäuse 19 getragen wird, welches den Förderkasten 11 mit Abstand umgibt. Die hierdurch entstehenden Seitenhohlräume 36 und der Bodenhohlraum 37 sind im Bereich des Austragstutzens 33 gegen den Förderraum 39 durch Schotte 38 staubdicht verschlossen, von denen in den Fig. 2 und 3 nur das Schott 38 für den Bodenhohlraum zu erkennen ist.

In dem Schott 38 befindet sich eine Große, halbovale Öffnung 40, die durch eine Berstscheibe 41 aus dünnem Blech von etwa 0,4 mm Dicke verschlossen ist. Die Berstscheibe 41 ist durch Nieten oder Schrauben 42 am Rand der Öffnung 40 staubdicht befestigt, so daß vom Förderraum 39 aus kein Staub in den Bodenhohlraum 37 eindringen kann.

Am Schott 38 ist eine Überwachungseinrichtung 43 befestigt, die mit einem Fühler 44, Dehnungsmeßstreifen od. dgl. die Berstscheibe 41 abtastet und ein akustisches oder optisches Signal auslöst, wenn die Berstscheibe 41 zerstört oder außergewöhnlich verformt wird.

In dem der Berstscheibe 41 gegenüberliegenden Teil der Stirnwand 22 ist in dieser Stirnwand ein Sichtfenster 45 angeordnet, durch welches der Zustand der Berstscheibe 41 beobachtet werden kann.

In den Seitenwänden 13 und 16 des Förderkastens 11 sind zweckmäßig Öffnungen 46 vorgesehen, die durch Gewebe- oder Sinterfilter 47 verschlossen sind. Durch diese Sinterfilter 47 ist der Ausgleich des Arbeitsdruckes zwischen dem Inneren des Förderkastens bzw. dem Förderraum 39 einerseits und den Hohlräumen 36, 37 zwischen Förderkasten 11 und Gehäuse 19 andererseits möglich, ohne daß Staub aus dem Förderraum in die Hohlräume zwischen Gehäuse und förderkasten eindringen kann.

In Fig. 3 ist eine etwas andere Ausführungsform gezeigt, bei der in dem Schott 38 zwei kreisrunde Berstscheiben 41 angeordnet sind. Außerdem befindet sich hier auch in dem Schott 38 ein Sinterfilter 47 zum Ausgleich des Arbeitsdruckes.

Die Erfindung ist nicht auf die dargestellten Ausführungsbeispiele beschränkt, sondern es sind mehrere Änderungen und Ergänzungen möglich, ohne den Rahmen der Erfindung zu verlassen. Beispielsweise können auch in den die Seitenhohlräume 36 verschließenden Schotten Reißscheiben angeordnet sein und es ist auch möglich, noch an anderen Stellen Überwachungseinrichtungen vorzusehen. Es ist auch möglich, die Seitenhohlräume zwischen Gehäuse und Förderkasten vom Bodenhohlraum zu trennen, obgleich es natürlich vorteilhafter ist, wenn die Seitenhohlräume mit dem Bodenhohlraum in Verbindung stehen. Ferner ist es auch möglich, die vordere Stirnwand 21 des Gehäuses 19 im Abstand von dem dann auch an seiner Stirnseite verschlossenen Förderkasten anzuordnen und dann auch in der Stirnwand des Förderkastens Berstscheiben vorzusehen, um im Falle einer Explosion sofort den Förderraum zu öffnen und ihn mit den umgebenen Hohlräumen des zylindrischen Gehäuses in Verbindung zu bringen. Ferner ist es möglich, das zylindrische Gehäuse noch zusätzlich mit Aussteifungen und Verstärkungen zu versehen, um seine Druckfestigkeit für den Fall einer Explosion zu vergrößern.

## Ansprüche

1. Förderer, insbesondere für Kohle mit einem aus Böden (14, 15) und Seitenwänden (13, 16) bestehenden geschlossenen Förderkasten (11) und mit einem im wesentlichen zylindrischen Gehäuse (19), welches den Förderkasten mit Abstand umgibt, dadurch gekennzeichnet, daß die Hohlräume (36, 37) zwischen Förderkasten (11) und Gehäuse (19) gegen den Förderraum (39) durch mindestens ein Schott (38) staubdicht abgeschlossen sind, in welchem mindestens eine Berstscheibe (41) angeordnet ist.

2. Förderer nach Anspruch 1, dadurch gekennzeichnet, daß die Seitenhohlräume (36) zwischen der zylindrischen Gehäusewand (20) und den Seitenwänden (13) des Förderkastens (11) mit den Bodenhohlräumen (37) zwischen der Gehäusewand (20) und den Böden (14) des Förderkastens (11) in Verbindung stehen.

3. Förderer nach Anspruch 1 oder 2, dadurch gekennzeichnet, daß in den Seitenwänden (13) des Förderkastens (11) und/oder in dem Schott (38) mindestens eine staubdicht, aber nicht druckdicht verschlossene Öffnung (46) angeordnet ist.

4. Förderer nach einem der Ansprüche 1 bis 3, dadurch gekennzeichnet, daß die Berstscheibe (41) eine dünne Scheibe aus Blech oder Kunststoff ist, die am Schott (38) befestigt ist.

5. Förderer nach einem der Ansprüche 1 bis 4, dadurch gekennzeichnet, daß die Öffnungen (46) in den Seitenwänden (13) des Förderkastens (11) und/oder im Schott (38) durch Gewebe- oder Sinterfilter (47) verschlossen sind.

6. Förderer nach einem der Ansprüche 1 bis 5, dadurch gekennzeichnet, daß der Berstscheibe (41) eine Überwachungseinrichtung (43) zugeordnet ist, die den Zustand der Berstscheibe (41) kontrolliert.

7. Förderer nach einem der Ansprüche 1 bis 6, dadurch gekennzeichnet, daß in der Gehäusewand (22) an einer der Berstscheibe (41) gegenüberliegenden Stelle ein Sichtfenster (45) angeordnet ist.

## Claims

1. Conveyor, especially for coal, with a conveying duct casing (11) which is closed and which comprises floors (14, 15) and side walls (13, 16), and with a substantially cylindrical housing (19) surrounding the conveying duct casing at a spacing therefrom, characterised in that the spaces (36, 37) between the conveying duct casing (11) and the housing (19) are closed off from the conveying compartment (39) in dust-tight manner by at least one partition (38), at least one explosion relief panel (41) being arranged in the said partition.

2. Conveyor according to claim 1, characterised in that the side spaces (36) between the cylindrical housing wall (20) and the side walls (13) of the conveying duct casing (11) communicate with the floor spaces (37) between the housing wall (20) and the foors (14) of the conveying duct casing (11).

3. Conveyor according to claim 1 or 2, characterised in that at least one aperture (46), which is closed in dust-tight manner but not in pressure-tight manner, is arranged in the side walls (13) of the conveying duct casing (11) and/or in the partition (38).

4. Conveyor according to one of claims 1 to 3, characterised in that the explosion relief panel (41) is a thin panel of sheet metal or synthetic plastic material which is secured to the partition (38).

5. Conveyor according to one of claims 1 to 4, characterised in that the apertures (46) in the side walls (13) of the conveying duct casing (11) and/or in the partition (38) are closed by sintered-material of fabric filters (47).

6. Conveyor according to one of claims 1 to 5, characterised in that there is associated with the explosion relief panel (41) a monitoring device (43) which monitors the state of the explosion relief panel (41).

7. Conveyor according to one of claims 1 to 6, characterised in that a viewing window (45) is provided in the housing wall (22) at a place opposite the explosion relief panel (41).

## Revendications

1. Transporteur, en particulier transporteur à charbon, comportant une caisse de transport fermée, (11) formée par des fonds (14, 15) et par des parois latérales (13, 16), et un carter (19), en substance cylindrique, qui entoure la caisse de transport tout en se trouvant à distance de celle-ci, le transporteur étant caractérisé en ce que les chambres (36, 37) comprises entre la caisse de transport (11) et le carter (19) sont fermées par rapport à la chambre de transport (39), de façon à assurer l'étanchéité à la poussière, par au moins une cloison (38), dans laquelle il est prévu au moins une plaque à éclatement (41).

2. Transporteur suivant la revendication 1, caractérisé en ce que les chambres latérales (36) comprises entre la paroi cylindrique (20) du carter et les parois latérales (13) de la caisse de transport (11) sont en communication avec la chambre de fond (37) comprise entre la paroi (20) du carter et le fond (14) de la caisse de transport (11).

3. Transporteur suivant l'une ou l'autre des revendications 1 et 2, caractérisé en ce que dans les parois latérales (13) de la caisse de transport (11) et/ou dans la cloison (38) il est prévu au moins une ouverture (46) qui est fermée de façon à assurer l'étanchéité à la poussière, mais non l'étanchéité à la pression.

4. Transporteur suivant l'une quelconque des revendications 1 à 3, caractérisé en ce que la plaque à éclatement (41) est une mince plaque de tôle ou de matière synthétique, qui est fixée à la cloison (38).

5. Transporteur suivant l'une quelconque des revendications 1 à 4, caractérisé en ce que les ouvertures (46) prévues dans les parois latérales (13) de la caisse de transport (11) et/ou dans la cloison (38) sont fermées par des filtres de tissu ou de matière frittée (47).

6. Transporteur suivant l'une quelconque des revendications 1 à 5, caractérisé en ce qu'à la plaque à éclatement (41) est adjoint un appareil de surveillance (43), qui vérifie l'état de cette plaque à éclatement (41).

7. Transporteur suivant l'une quelconque des revendications 1 à 6, caractérisé en ce que dans la paroi (22) du carter, en un endroit en regard de la plaque à éclatement (41), il est prévu un regard (45).

FIG.1

FIG. 2

FIG. 3

2